# EUROPÄISCHE PATENTSCHRIFT

(11) **EP 1 669 156 B1**
(45) Veröffentlichungstag und Bekanntmachung des Hinweises auf die Patenterteilung: **06.02.2008**
(21) Anmeldenummer: 05026449.8
(22) Anmeldetag: 05.12.2005
(51) Int. Cl.: B23K 26/32, B23K 26/24, B23K 26/02, B23K 37/04

(54) **Spanneinrichtung zur Spalterzeugung für das Fügen von mehr als zwei aufeinander gespannten, einen Beschichtungswerkstoff aufweisenden Blechen, mit zwei federnden Schenkeln und jedem dieser Schenkel zugeordnetes Spaltelement und Tastelement**
Clamping device for creating a gap for the joining of more than two metal sheets layered with two spring-like parts and, for each part, a gap creating element and a contacting element
Dispositif de serrage pour créer un jeu lors de l'assemblage de plus de deux tôles comprenant deux parties type ressorts, et, pour chaque partie, un élément pour créer le jeu et un élément de contact

(30) Priorität: 11.12.2004 DE 102004059830
(43) Veröffentlichungstag der Anmeldung: 14.06.2006
(73) Patentinhaber: ThyssenKrupp Drauz Nothelfer GmbH, 74076 Heilbronn (DE)
(72) Erfinder: Stein, Hans, 09337 Hohenstein-Erntsthal Wüstenbrand (DE); Fiebig, Thomas, 09394 Hohndorf (DE)
(74) Vertreter: Neumann, Steffen

(56) Entgegenhaltungen:
- DE-A1- 10 159 459
- DE-B3- 10 245 352
- DE-U1-0202004 010 86
- PATENT ABSTRACTS OF JAPAN Bd. 2000, Nr. 14, 5. März 2001 (2001-03-05) -& JP 2000 326078 A (DAIHATSU MOTOR CO LTD), 28. November 2000 (2000-11-28)

## Beschreibung

Die Erfindung betrifft eine Vorrichtung zur Spalterzeugung für das Fügen von mehr als zwei aufeinander gespannten, einen Beschichtungswerkstoff aufweisenden Blechen mit flanschähnlichen und/oder ebenen Querschnitten gemäß dem Oberbegriff des Anspruchs 1.

Für das Laserschweißen ist eine derartige Lösung aus der DE 102 45 352 B3 in Verbindung mit der DE 101 59 459 B4 bekannt. Dabei sind an einem Gestell die Schweißoptik eines Schweißgeräts mit einer mitlaufenden Andrückvorrichtung zum Aufeinanderspannen der Blechflansche und ein Ausleger befindlich, an dessen freiem Ende ein Hebel federnd angelenkt ist. Dessen freies Ende ist als Lagergabel ausgestaltet, in der frei drehbar ein als Messerrolle ausgebildetes Spaltelement gehalten ist. Dieses Spaltelement beinhaltet eine oder mehrere Schneiden, die für die erforderliche Entgasung des Beschichtungswerkstoffs zwischen die Flansche der zu verschweißenden Bleche eindrückbar sind. Zur lagegerechten Positionierung des Spaltelements ist ein Schenkel der Lagergabel über die Schneiden des Spaltelements hinaus reichend ausgebildet und am freien Ende dieser Verlängerung mit einer Auflaufschräge versehen, die in eine Auflagefläche übergeht. Zur Erzeugung des Spalts zwischen den Blechflanschen ist die Lagergabel um die Achse des Spaltelements schwenkbar gelagert.
Diese Lösung eignet sich besonders für die Spalterzeugung zur Entgasung beim Verschweißen von zwei Blechflanschen. Darüber hinaus ist ihre Anwendung grundsätzlich auch für die Herstellung von Klebeverbindungen denkbar, bei denen der Klebstoff zwingend in einen Spalt zwischen den Blechen eingebracht werden muss. Soll demgegenüber auch eine wirksame Entgasung beim Verschweißen oder ein Verkleben von drei Blechflanschen erfolgen, so wirkt sich nachteilig aus, dass dann, wenn die Bleche in ihrer Dicke von größeren Toleranzabweichungen geprägt sind, die Schneiden zur Spalterzeugung nicht mehr zwischen den aufeinander liegenden Blechflansche positioniert werden können, weil zumindest eine der Schneiden an der Stirnfläche eines der Bleche zur Anlage kommt. Dies ist dadurch bedingt, dass der die bauteileinheitlich ausgeführten Spaltelemente beinhaltende Hebel nur in seiner Gesamtheit federnd mit dem Ausleger verbunden ist, womit jedoch in Verbindung mit der am verlängerten Schenkel der Lagergabel befindlichen und die alleinige Bezugsbasis darstellende Auflagefläche eine gleichzeitige Positionierung beider Messerrollen auf der für die Spaltbildung jeweils erforderlichen Höhe zwischen den Blechen nicht absicherbar ist.
Dadurch kann eine für die Qualität der Schweißnaht unschädliche seitliche Entgasung des beim Schweißen verdampfenden Beschichtungswerkstoffes (z. B. Zink) der Bleche nicht erfolgen, da die erforderliche spaltförmige Aufweitung der Bleche unterblieben ist, so dass die Gase explosionsartig durch die flüssige Schweißnaht austreten würden. Im Falle einer Klebeverbindung ist es nicht möglich, den Klebstoff zwischen den Blechen einzubringen.

Die Aufgabe der Erfindung besteht darin, eine Lösung vorzuschlagen, bei der beim Verschweißen oder Verkleben von mehr als zwei Blechen, vorzugsweise drei Blechen, die für die Entgasung oder den Klebstoffeintrag notwendige Spaltbildung/Spalthaltung zwischen den Blechen auch dann abgesichert werden kann, wenn die Dicke der zu verschweißenden Bleche von größeren Toleranzabweichungen geprägt ist.

Diese Erfindung wird bei einer Spanneinrichtung gemäß dem Patentanspruch 1 definiert.

Die Vorteile der Erfindung bestehen darin, dass beim Verschweißen oder Verkleben von mehr als zwei, insbesondere drei, in der Spanneinrichtung aufeinander gespannten, einen Beschichtungswerkstoff aufweisenden Blechen eine sichere Spalterzeugung dadurch abgesichert werden kann, da die Schneide jedes der Spaltelemente in Bezug auf die Auflagefläche seines zugeordneten Tastelements lediglich einen Abstand abdecken muss, welcher der Dicke eines einzelnen Bleches entspricht. Dadurch kann verhindert werden, dass sich Toleranzen bezüglich der Blechdicke so summieren, dass ein die Bleche aufweitender Eingriff des Spaltelements zwischen die Bleche unmöglich wird.

Vorteilhafte Weiterbildungen der Erfindung sind aus den Patentansprüchen 2 bis 4 ersichtlich.

Die Erfindung soll nachfolgend an einem Ausführungsbeispiel und zugehörigen Zeichnungen näher erläutert werden.

Es zeigen:
- Fig. 1: eine perspektivische Ansicht der erfindungsgemäßen Vorrichtung zur Spalterzeugung mit einer Spannvorrichtung
- Fig. 2: eine Draufsicht der erfindungsgemäßen Vorrichtung zur Spalterzeugung mit einer Spannvorrichtung (dargestellt ohne Spannwippe 15)
- Fig. 3: eine Schnittdarstellung entlang der Linie A - A der Fig. 2 der erfindungsgemäßen Vorrichtung zur Spalterzeugung mit einer Spannvorrichtung
- Fig. 4: eine vergrößerte Darstellung der Einzelheit "X" aus Fig. 1

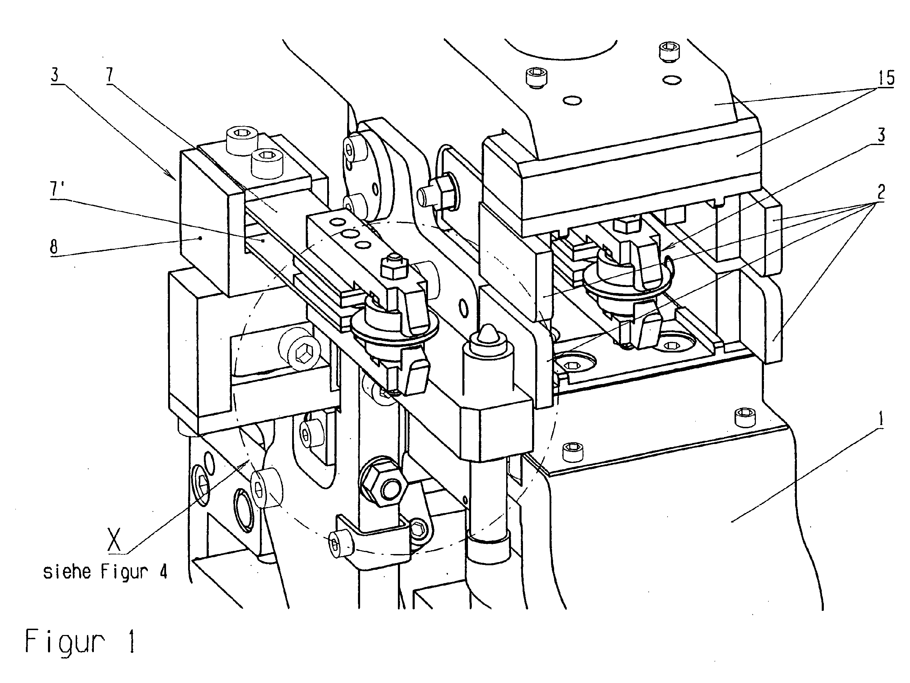

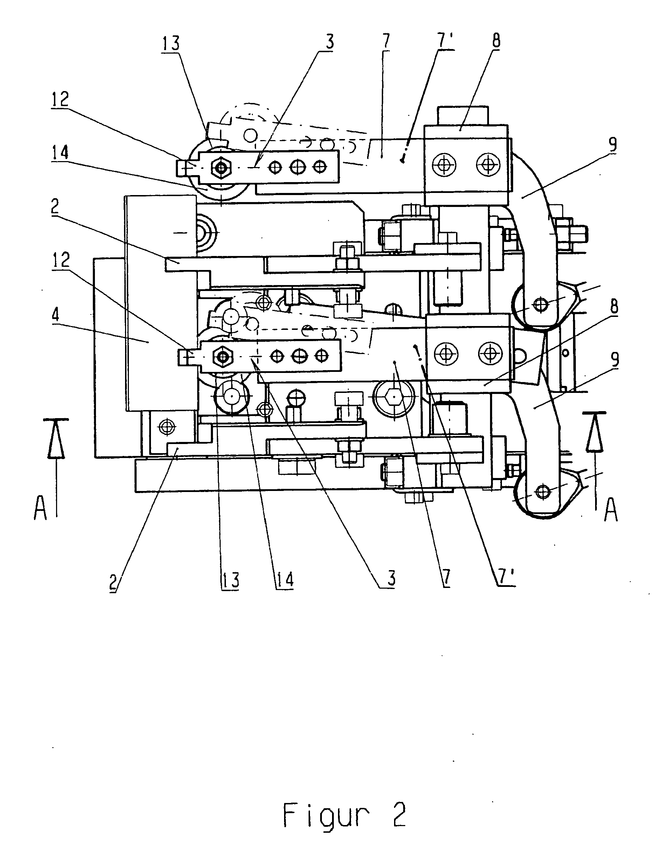

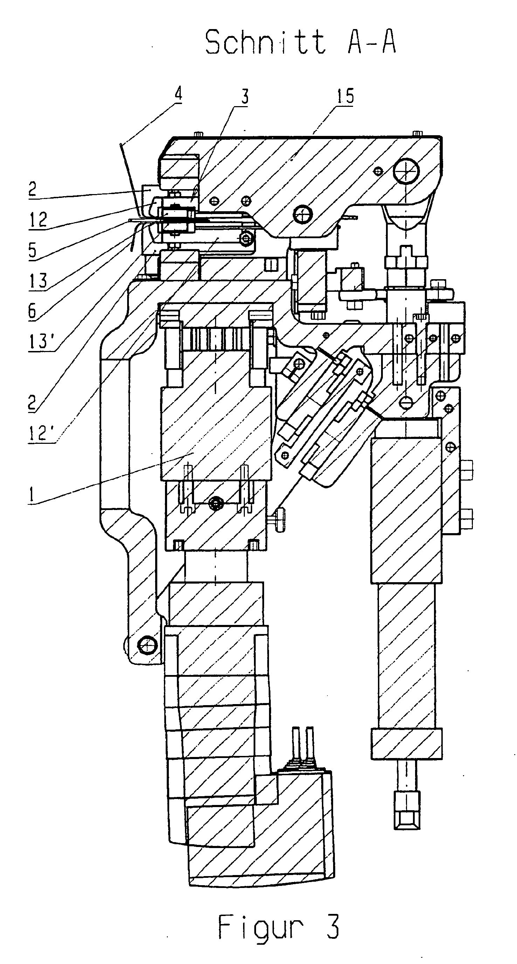

In der Fig. 1 ist ein Gestell 1 dargestellt, an dem eine aus vier Spannbacken 2 bestehende Spanneinrichtung und die erfindungsgemäße Spalterzeugungsvorrichtung 3 für die Entgasung beim Schweißen mit einem Laserstrahl oder das Verkleben von drei in einer Spanneinrichtung aufeinander gespannten, einen Beschichtungswerkstoff aufweisenden, in den Fig. 2 und 3 gezeigten Blechen 4, 5, 6 mit flanschähnlichen und/oder ebenen Querschnitten, befindlich sind.
Diese Spalterzeugungsvorrichtung 3 ist im Bereich zwischen den Spannbacken 2 angeordnet. In Abhängigkeit der Längserstreckung der zu verschweißenden Bleche 4, 5, 6 besteht auch die Möglichkeit, einerseits (Fig. 1) oder auch beiderseits der Spannbacken 2 eine weitere Spalterzeugungsvorrichtung 3 vorzusehen.

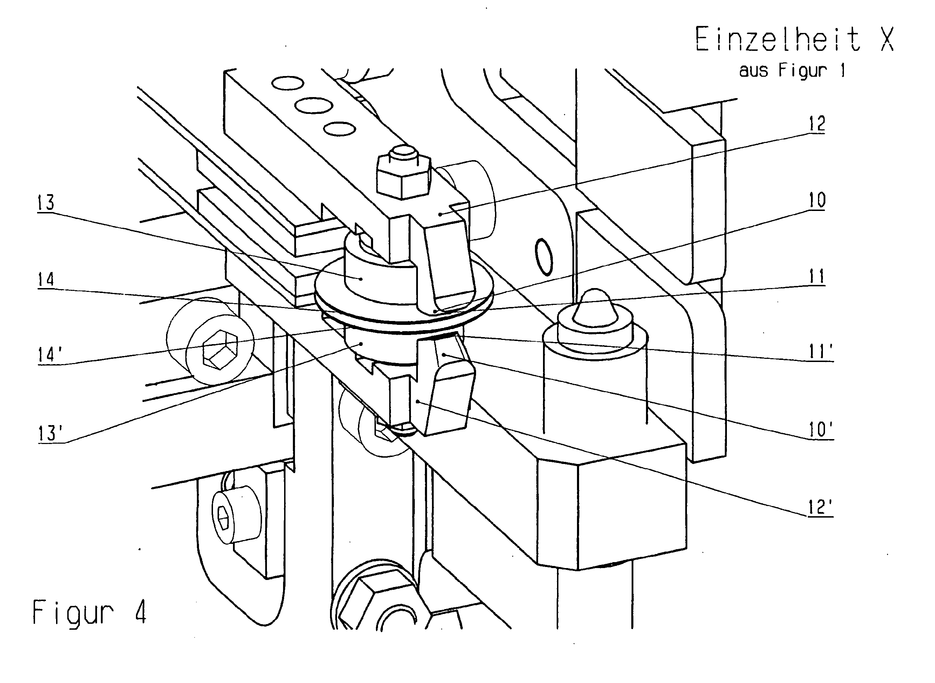

Die Spalterzeugungsvorrichtung 3 besteht aus zwei blattfederartig ausgebildeten und parallel zueinander verlaufenden, federnd vorgespannten Schenkeln 7, 7', deren eines Ende an einem Spannblock 8 angeordnet ist, der mit einem antreibbaren Schwenkhebel 9 in Wirkverbindung steht (Fig. 2). An den blechseitigen Enden der Schenkel 7, 7' ist jeweils ein eine Auflaufschräge 10, 10' und eine Auflagefläche 11, 11' tragendes Tastelement 12, 12' und ein Spaltelement 13, 13' angeordnet. Dabei beinhaltet das Spaltelement 13, 13' eine Schneide 14, 14' und kann als drehbare Messerolle (siehe Figur 4) oder als ein nicht dargestelltes starres Messer ausgeführt sein. Außerdem ist zur Betätigung der Spannbacken 2 eine Spannwippe 15 vorgesehen, so dass die Bleche 4, 5, 6 gespannt werden können.

Nachfolgend soll die Funktionsweise der erfindungsgemäßen Spalterzeugungsvorrichtung erläutert werden:
Nachdem die zu verschweißenden oder zu verklebenden Bleche 4, 5, 6 zwischen den Spannbacken 2 vorpositioniert worden sind, bewegt der mit dem Spannblock 8 verbundene und angetriebene Schwenkhebel 9 die Spalterzeugungsvorrichtung 3 aus der in der Fig. 2 gezeigten ausgeschwenkten Stellung (dünn ausgezogene Strichstärke) in Richtung der Bleche 4, 5, 6. Dabei gelangt zunächst die jeweilige Auflaufschräge 10, 10' des Tastelements 12, 12' mit der Stirnseite des Bleches 4 bzw. des Bleches 6 in Kontakt bis nachfolgend die jeweilige Auflagefläche 11, 11' des Tastelements 12, 12' gegen Kraft des federvorgespannten Schenkels 7, 7' auf der Oberseite des Bleches 4 bzw. der Unterseite des Bleches 6 zur Anlage gelangt. Damit sind die Voraussetzungen dafür geschaffen, dass bei einer weiteren Schwenkbewegung nunmehr die Schneide 14, 14' des jeweiligen messerrollenartigen Spaltelements 13, 13' zwischen die Bleche 4, 5 bzw. 5, 6 eingeführt werden und sich entlang der Unterkante der Bleche bewegen kann, weil das Tastelement 12, 12' und die Schneide 14, 14' des Spaltelements 13, 13' zueinander in Bezug auf das Maß der Dicke der Bleche 4, 6 justiert ausgestaltet sind. Nach dem von der Spannwippe 15 bewirkten Schließen der Spannbacken 2 gewährleistet die Schneide 14, 14' des Spaltelements 13, 13' die für die beim nachfolgenden Schweißen oder Verkleben erforderliche Aufrechterhaltung der spaltenförmigen Aufweitung zwischen den Blechen 4, 5 und 5, 6, so dass der verdampfende Beschichtungswerkstoff seitlich der Bleche und nicht durch die flüssige Schweißnaht austreten bzw. der zum Verkleben benötigte Klebstoff zwischen den Blechen eingebracht werden kann.

### Bezugszeichenliste

- 1: Gestell
- 2: Spannbacken
- 3: Spalterzeugungsvorrichtung
- 4: Blech
- 5: Blech
- 6: Blech
- 7: Schenkel
- 7': Schenkel
- 8: Spannblock
- 9: Schwenkhebel
- 10: Auflaufschräge
- 10': Auflaufschräge
- 11: Auflagefläche
- 11': Auflagefläche
- 12: Tastelement
- 12': Tastelement
- 13: Spaltelement
- 13': Spaltelement
- 14: Schneide
- 14': Schneide
- 15: Spannwippe

## Patentansprüche

1. Spanneinrichtung zur Spalterzeugung für des Fügen von mehr als zwei aufeinander gespannten, einen Beschichtungswerkstoff aufweisenden Blechen (4, 5, 6) mit flanschähnlichen und/oder ebenen Querschnitten bestehend aus einem schwenkbaren Hebel und einer Vorrichtung für das Fügen von diesen mehr als zwei aufeinander gespannten, einen Beschichtungswerkstoff aufweisenden Blechen (4, 5, 6), wobei zur Spalterzeugung zwischen die Flansche der Bleche (4, 5, 6) eindrückbare Spaltelemente (13, 13') vorgesehen sind, die mittels des schwenkbaren Hebels gehalten und mit einem eine Auflaufschräge und eine Auflagefläche tragenden Tastelement (12, 12') ausgestattet sind,
**dadurch gekennzeichnet,**
**dass** der Hebel aus zwei federnden Schenkeln (7, 7') besteht, wobei jedem dieser Schenkel (7, 7') sowohl ein Spaltelement (13, 13') als auch ein Tastelement (12, 12') zugeordnet ist.

2. Spanneinrichtung zur Spalterzeugung nach Patentanspruch 1,
**dadurch gekennzeichnet,**
**dass** die federnden Schenkel (7, 7') blattfederartig ausgebildet sind.

3. Spanneinrichtung zur Spalterzeugung nach Patentanspruch 1 oder 2,
**dadurch gekennzeichnet,**
**dass** die Schenkel (7, 7') parallel zueinander verlaufend angeordnet sind.

4. Spanneinrichtung zur Spalterzeugung nach Patentanspruch 1,
**dadurch gekennzeichnet,**
**dass** die Schenkel (7, 7') an einem Spannblock (8) angeordnet sind, der mit einem antreibbaren Schwenkhebel (9) in Wirkverbindung steht.

## Claims

1. Clamping device for creating a gap for the joining of more than two metal sheets (4, 5, 6) layered with flange-like and/or plain cross-sections consisting of a swivelling lever and a device for joining said more than two metal sheets (4, 5, 6) layered, whereby for the purpose of gap creation spring-back gap creating elements (13, 13') are provided between the flanges of the metal sheets (4, 5, 6) that are kept by the swivelling lever and equipped with a contacting element (12, 12') bearing a runout bevel and a supporting surface
**characterized in that**
the lever consists of two spring-like parts (7, 7'), wherein both a gap-creating element (13, 13') and a contacting element (12, 12') are assigned to each of these spring-like parts (7, 7').

2. Clamping device for creating a gap according to Claim 1
**characterized in that**
the spring-like parts (7, 7') are of leaf spring-like shape.

3. Clamping device for creating a gap according to Claim 1 or 2
**characterized in that**
the parts (7, 7') are arranged in parallel.

4. Clamping device for creating a gap according to Claim 1
**characterized in that**
the parts (7, 7') are arranged at a clamping block (8) being in a functional connection with a swivelling lever (9) that can be driven.

## Revendications

1. Dispositif de serrage pour créer un jeu lors de l'assemblage de plus de deux tôles revêtues en parement (4, 5, 6) dont les coupes transversales présentent la forme d'une collerette et/ou d'une surface plane, comprenant un levier pivotant et un dispositif pour créer un jeu lors de l'assemblage de ces plus de deux tôles revêtues en parement (4, 5, 6) où, afin de créer ledit jeu, des éléments à enfoncer pour créer le jeu (13, 13') sont disposés entre les collerettes des tôles (4, 5, 6), ces éléments étant tenus par le levier pivotant et équipés d'un élément de contact (12, 12'), ce dernier supportant un plan incliné et une surface d'appui, **caractérisé par le fait**
**que** le levier consiste en deux parties type ressort (7, 7') et que, chacune de ces parties (7, 7'), est doté d'un élément pour créer le jeu (13, 13') et d'un élément de contact (12, 12').

2. Dispositif de serrage pour créer un jeu selon la revendication 1,
**caractérisé par le fait**
**que** les parties type ressorts (7, 7') sont conçues en tant que ressorts à lames.

3. Dispositif de serrage pour créer un jeu selon les revendications 1 ou 2,
**caractérisé par le fait**
**que** les parties type ressorts (7, 7') sont disposées en parallèle.

4. Dispositif de serrage pour créer un jeu selon la revendication 1,
**caractérisé par le fait**
**que** les parties type ressorts (7, 7') sont disposées sur un bloc de serrage (8) qui est relié à un levier pivotant mécanisé (9).
